# EUROPÄISCHE PATENTSCHRIFT

(11) **EP 1 299 227 B1**
(45) Veröffentlichungstag und Bekanntmachung des Hinweises auf die Patenterteilung: **06.10.2004**
(21) Anmeldenummer: 01929419.8
(22) Anmeldetag: 07.03.2001
(51) Int. Cl.: B29C 73/16

(54) **ABDICHTVORRICHTUNG**
SEALING DEVICE
DISPOSITIF D'ETANCHEIFICATION

(30) Priorität: 27.03.2000 DE 10015166
(43) Veröffentlichungstag der Anmeldung: 09.04.2003
(73) Patentinhaber: Dunlop GmbH & Co. KG, 63450 Hanau (DE)
(72) Erfinder: ECKHARDT, Arnold, 63691 Randstadt (DE)
(74) Vertreter: Manitz, Finsterwald & Partner GbR
(86) Internationale Anmeldenummer: PCT/EP2001/002564
(87) Internationale Veröffentlichungsnummer: WO 2001/072504

(56) Entgegenhaltungen:
- EP-A- 0 753 420
- DE-A- 3 635 574

## Beschreibung

Die Erfindung betrifft eine Entnahmeeinheit für eine Vorrichtung zum Abdichten aufblasbarer Gegenstände, insbesondere Reifen. Die Erfindung betrifft ferner eine eine derartige Entnahmeeinheit umfassende Abdichtvorrichtung mit einem ein Abdichtmittel enthaltenden Behälter, wobei die Entnahmeeinheit lösbar mit dem Behälter verbunden, bevorzugt verschraubt, ist und wenigstens eine an eine Gasdruckquelle anschließbare Einlaßleitung und zumindest eine mit einem abzudichtenden Gegenstand koppelbare Auslaßleitung aufweist.

Derartige Vorrichtungen sind bekannt und dienen dazu, ein Leck in dem aufblasbaren Gegenstand, beispielsweise in einem durchstochenen oder während der Fahrt beschädigten Reifen, dadurch abzudichten, daß ein spezielles Abdichtmittel über das Reifenventil in den Reifen eingebracht und der Reifen anschließend zumindest auf einen Druck, bei dem er gefahren werden kann, aufgepumpt wird.

Die deutsche Patentanmeldung 198 46 451.7 mit Anmeldetag 08.10.1998, sowie EP-A-0 753 420, die den Oberbegriff für des Anspruch 1 bildet, beschreibt eine derartige Abdichtvorrichtung.

Es ist das der Erfindung zugrundeliegende Problem (Aufgabe), eine Vorrichtung der eingangs genannten Art derart weiterzubilden, daß sie möglichst einfach handhabbar ist.

Die Lösung dieser Aufgabe erfolgt durch die Merkmale des Anspruchs 1 und insbesondere dadurch, daß in den Behälter hineinragende Enden der Leitungen durch eine mittels Gasdrück entfernbare, insbesondere absprengbare Verschlußanordnung fluiddicht gegenüber dem Behälterinnenraum abgedichtet sind.

Erfindungsgemäß sorgt die Verschlußanordnung dafür, daß auch bei mit der Entnahmeeinheit gekoppeltem Behälter das darin enthaltene Abdichtmittel nicht über die Einlaßleitung und die Auslaßleitung ausfließen kann. Zur Inbetriebnahme der Abdichtvorrichtung braucht lediglich die Verschlußanordnung entfernt bzw. abgesprengt werden, woraufhin die Abdichtvorrichtung sofort betriebsbereit ist. Die Erfindung ermöglicht es, die Verschlußanordnung durch Anlegen eines Gasdrucks an die Einlaßleitung und/oder die Auslaßleitung zu entfernen. Vorzugsweise dient hierzu der ohnehin für den Betrieb der Abdichtvorrichtung erforderliche, von der Gasdruckquelle über die Einlaßleitung aufbringbare Gasdruck. Zur Inbetriebnahme der Vorrichtung ist es also lediglich erforderlich, die an die Einlaßleitung angeschlossene Gasdruckquelle zu aktivieren, wodurch automatisch die Verschlußanordnung entfernt bzw. abgesprengt und das Abdichtmittel aufgrund des sich im Behälter aufbauenden Drucks über die Auslaßleitung in den abzudichtenden Gegenstand gedrückt wird. Ein wesentlicher Vorteil der Erfindung besteht darin, daß die Abdichtvorrichtung komplett vormontiert im betriebsbereiten Zustand, d.h. bei mit der Entnahmeeinheit verbundenem bzw. verschraubtem Behälter, z.B. in einem Fahrzeug aufbewahrt werden kann. Die Erfindung schafft somit einen außerordentlich hohen Benutzungskomfort.

Bevorzugt ist es, wenn die Verschlußanordnung einteilig und insbesondere kappenartig ausgebildet ist. Bei Nichtbenutzung sind die Enden sowohl der Einlaßleitung als auch der Auslaßleitung somit gleichzeitig von einem beispielsweise als Abdeckkappe ausgebildeten Verschlußorgan fluiddicht abgedichtet.

Die Verschlußanordnung bzw. die Abdeckkappe kann auf zumindest ein Leitungsende aufgeschoben oder aufgesteckt sein. Festgehalten auf dem oder den Leitungsenden wird die Verschlußanordnung beispielsweise durch Klemmkräfte und/oder durch Verrasten. Durch derartige Kopplungen zwischen der Verschlußanordnung und der Entnahmeeinheit kann eine sichere und dauerhafte fluiddichte Abdeckung der Leitungsenden im Vorbenutzungszustand gewährleistet werden.

In einer besonders bevorzugten Ausgestaltung der Erfindung verlaufen die Leitungsenden zumindest bereichsweise koaxial zueinander, wobei das eine Leitungsende über das andere Leitungsende hinaus in den Behälter hinein vorsteht und die Verschlußanordnung zwei jeweils mit einem Leitungsende zusammenwirkende, axial beabstandete Dichtungsabschnitte aufweist. Hierbei kann die beispielsweise in Form einer Abdeckkappe vorgesehene Verschlußanordnung im Bereich ihres freien Endes mit dem weniger weit in den Behälter hineinragenden Leitungsende zusammenwirken, während das weiter in den Behälter und somit in die Verschlußanordnung hineinragende Leitungsende, bei dem es sich vorzugsweise um das Leitungsende der Einlaßleitung handelt, von einem näher am geschlossenen Ende der Verschlußanordnung gelegenen Bereich abgedichtet wird.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: eine geschnittene Seitenansicht einer Abdichtvorrichtung gemäß einer Ausführungsform der Erfindung, und
- Fig. 2: in einem vergrößerten Ausschnitt II von Fig. 1 eine Leitungsenden abdichtende Verschlußanordnung der Abdichtvorrichtung.

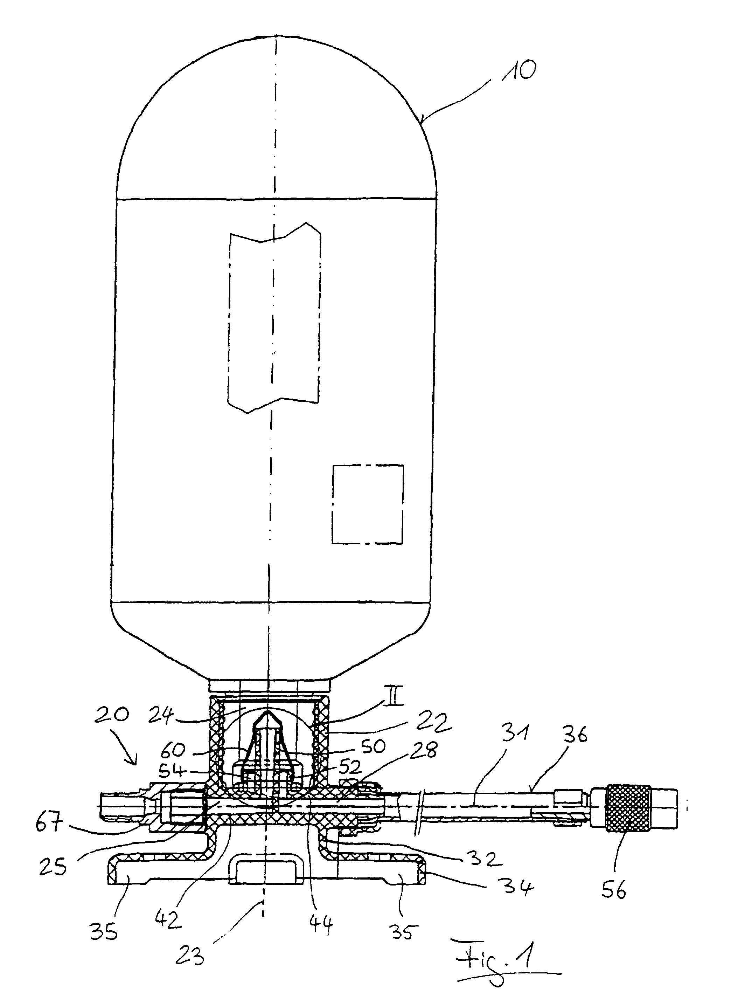

Gemäß Fig. 1 umfaßt die Abdichtvorrichtung einen flaschenartig geformten, druckfesten Behälter 10 aus recyclingfähigem Kunststoff, der einen nach Art eines Flaschenhalses ausgebildeten, etwa zylindrischen Anschlußabschnitt 24 aufweist, der im folgenden als Hals bezeichnet wird.

Der Hals 24 ist an seiner Außenseite mit einem Gewinde versehen, welches es gestattet, den Behälter 10 in einen ein passendes Innengewinde aufweisenden Anschlußstutzen 22 einer ebenfalls aus recyclingfähigem Kunststoff hergestellten, einstückig ausgebildeten druckfesten Entnahmeeinheit 20 derart einzuschrauben, daß der Behälterinnenraum gegenüber der Umgebung abgedichtet ist.

Der Anschlußstutzen 22 der Entnahmeeinheit 20 und der Hals 24 des Behälters 10 weisen etwa die gleiche Länge auf.

Der Hals 24 des Behälters 10 kann derart ausgebildet sein, daß in den Hals 24 ein als Venturidüse ausgebildetes Adapterelement eingebracht, insbesondere eingeschraubt werden kann.

Der Behälter 10 enthält ein flüssiges Abdichtmittel, wie es beispielsweise in der deutschen Patentanmeldung 196 52 546 beschrieben ist. Der Behälter 10 kann z. B. zur Aufnahme eines Volumens von 700 - 800 ml, jedoch auch für eine geringere Füllmenge von z.B. 450 ml oder eine größere Füllmenge von z.B. 800 ml ausgelegt sein. Im Originalzustand vor seiner ersten Benutzung ist der Behälter 10 bevorzugt vollständig ohne Einschluß von Luft mit dem Abdichtmittel gefüllt, so daß keine störende Hautbildung auftreten kann. Grundsätzlich ist es aber auch möglich, den Behälter 10 im Originalzustand nur teilweise gefüllt vorzusehen.

Der Anschlußstutzen 22 bildet ein freies Ende eines zylindrischen Anschlußabschnitts 32 der Entnahmeeinheit 20, welcher sich an seinem von dem Behälter 10 abgewandten Ende in radialer Richtung zu einem Fußabschnitt 34 erweitert, der vier sich sternförmig in radialer Richtung vom Anschlußabschnitt 32 weg erstreckende Füße 35 umfaßt. Die maximale radiale Abmessung des Fußabschnitts 34 beträgt mehr als das Zweifache des Durchmessers des Anschlußabschnitts 32, wodurch ein sicherer Stand der Abdichtvorrichtung gewährleistet ist.

Im Anschlußabschnitt 32 der Entnahmeeinheit 20 sind zwei mit Abstand voneinander angeordnete Bodenplatten 42, 44 angeordnet, die den Fußabschnitt 34 vom Anschlußstutzen 22 trennen. An der oberen Bodenplatte 44 liegt der Behälter 10 im eingeschraubten Zustand gemäß Fig. 1 mit dem eine Öffnung des Behälters 10 begrenzenden Rand des Anschlußabschnitts 24 fluiddicht an.

Zwischen den beiden Bodenplatten 42, 44 erstrecken sich in radialer Richtung Innenabschnitte einer Einlaßleitung 25 bzw. einer Auslaßleitung 28, deren untere und obere Begrenzungswand jeweils durch die untere bzw. obere Bodenplatte 42 bzw. 44 gebildet wird.

Außerhalb des Anschlußabschnitts 32 der Entnahmeeinheit 20 gehen die Innenabschnitte jeweils in einen Außenabschnitt über. Die Innenabschnitte und die Außenabschnitte liegen mit ihren Mittelachsen auf einer gemeinsamen Längsachse 31.

Der Außenabschnitt der Einlaßleitung 25 ist als Gaseinlaß ausgebildet und im Zustand gemäß Fig. 1 mit einem Überdruck- und Rückschlagventil 67 versehen, das ein Gewinde zum Anschluß an eine nicht gezeigte Gasdruckquelle aufweist.

Der Außenabschnitt der Auslaßleitung 28 ist mit einer in Form eines Schlauches vorgesehenen Fülleitung 36 verbunden, über welche die Abdichtvorrichtung mit einem abzudichtenden Gegenstand gekoppelt werden kann.

Das sich an den Innenabschnitt anschließende Ende der Einlaßleitung 25 bildet einen Einströmkanal 50, dessen Längsachse mit der Längsachse 23 des Anschlußstutzens 22 zusammenfällt. Der Einströmkanal 50 ragt in den Anschlußstutzen 22 der Entnahmeeinheit 20 und somit in den Hals 24 des eingeschraubten Behälters 10 hinein, wobei sich der Einströmkanal 50 jedoch nicht über das freie Ende des Anschlußstutzens 22 hinaus erstreckt.

Der Einströmkanal 50 ist bereichsweise im Inneren eines vom Ende der Auslaßleitung 28 gebildeten Entnahmekanals 52 angeordnet, der den Einströmkanal 50 konzentrisch umgibt, so daß der Einströmkanal 50 und der Entnahmekanal 52 ein Koaxial-Leitungssystem bilden und ein Ringraum 54 entsteht, an den der Innenabschnitt der Auslaßleitung 28 angeschlossen ist.

Auf das vom Einströmkanal 50 und Entnahmekanal 52 gebildete Koaxial-Leitungssystem ist eine Verschlußanordnung in Form einer Abdeckkappe 60 aufgesteckt, durch welche der Einströmkanal 50 und der Entnahmekanal 52 und somit die in den Behälter 10 hineinragenden Enden der Einlaßleitung 25 und der Auslaßleitung 28 fluiddicht abgedichtet sind. Hierdurch kann in dem Vorbenutzungszustand gemäß Fig. 1 das Abdichtmittel auch nicht bei in den Anschlußstutzen 22 geschraubtem und z.B. auf dem Kopf stehendem Behälter 10 in die Einlaßleitung 25 und die Auslaßleitung 28 gelangen.

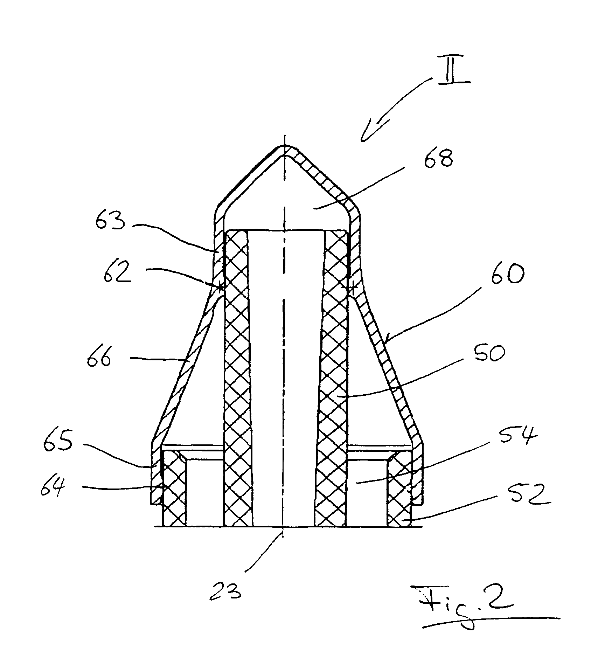

Die vergrößerte Darstellung der Fig. 2 zeigt, daß die Abdeckkappe 60 im Bereich von zwei axial beabstandeten Wandabschnitten 63, 65, die jeweils parallel zur Längsachse 23 verlaufen, mit Dichtabschnitten 62, 64 jeweils in Form einer umlaufenden Dichtrippe oder Dichtlippe versehen ist, über welche sich die Kappe 60 in klemmendem Dichteingriff mit der Außenwand des jeweiligen Leitungsendes 50, 52 befindet. Während der den Entnahmekanal 52 abdichtende Wandabschnitt 65 am offenen Ende der Kappe 60 gelegen ist und die Kappenöffnung begrenzt, befindet sich der zur Abdichtung des Einströmkanals 50 vorgesehene Wandabschnitt 63 näher am geschlossenen Ende der Kappe 60. Die beiden Wandabschnitt 63, 65 sind durch einen schräg zur Längsachse 23 verlaufenden Wandabschnitt 66 miteinander verbunden, so daß die Abdeckkappe 60 in dem dargestellten Ausführungsbeispiel eine trichterartige Form aufweist.

Die Abdeckkappe 60 ist bevorzugt aus Kunststoff hergestellt und derart elastisch verformbar, daß sie beim Aufstecken auf das Leitungssystem 50, 52 aufgeweitet wird und somit die im Bereich der Wandabschnitte 63, 65 ausgebildeten Dichtrippen bzw. Dichtwülste gegen die Leitungsenden 50, 52 gepreßt sind. Durch diese Vorspannung der Dichtabschnitte 62, 64 ist ein fluiddichter Klemmsitz der Kappe 60 auf dem Leitungssystem 50, 52 gewährleistet.

Aus Fig. 2 geht außerdem hervor, daß die freie innere Querschnittsfläche der Einlaßleitung 25 im Bereich des den Einströmkanal 50 bildenden Leitungsendes in Richtung des freien Endes zunimmt.

Die als Schlauch ausgebildete Fülleitung 36 ist an ihrem freien Ende mit einer z.B. zu einem VG8-Ventilgewinde passenden Überwurfmutter 56 versehen, um die Fülleitung 36 beispielsweise an einen abzudichtenden Reifen anschließen zu können. Die Fülleitung 36 kann entweder lösbar oder fest mit der Entnahmeeinheit 20 verbunden sein.

Die an die Einlaßleitung 25 anschließbare Gasdruckquelle ist bevorzugt zur Bereitstellung von Druckluft ausgebildet und kann beispielsweise als Kleinkompressor, KFZ-Zentralkom-pressor, stationäre Druckluftversorgungsanlage oder tragbarer Druckspeicherbehälter, wie sie beispielsweise an Tankstellen zur Verfügung stehen, oder als Hand- oder Fußluftpumpe ausgebildet sein. Der maximal von der Gasdruckquelle zu erbringende Druck braucht nicht größer zu sein als der für zumindest einen Notbetrieb des Reifens erforderliche Druck. Zum Entleeren des Behälters 10 braucht die Gasdruckquelle keinen bestimmten Mindestdruck erbringen zu können.

Die Funktionsweise der erfindungsgemäßen Abdichtvorrichtung wird im folgenden am Beispiel eines abzudichtenden Reifens beschrieben. Hinsichtlich des Funktionsprinzips sowie der vorteilhaften Ausgestaltungen, Anwendungen und Einsatzmöglichkeiten der erfindungsgemäßen Abdichtvorrichtung wird auch auf die deutsche Patentanmeldung 198 46 451.7 mit Anmeldetag 08.10.1998 verwiesen, deren diesbezüglicher Inhalt hiermit durch Bezugnahme in die vorliegende Anmeldung mit aufgenommen wird.

Zunächst wird die an die Auslaßleitung 28 der Entnahmeeinheit 20 angeschlossene Fülleitung 36 an das Ventil des Reifens angeschlossen. Die Gasdruckquelle kann dabei bereits an die Entnahmeeinheit 20 angeschlossen oder noch von dieser getrennt sein.

Eventuell noch vorhandener Restdruck im Reifen kann entweder über ein nicht dargestelltes, in der Fülleitung 36, der Entnahmeeinheit 20 oder dem Behälter 10 angeordnetes Ventil entweichen. Es ist auch möglich, die Fülleitung 36 zunächst an den Reifen und erst dann an die Entnahmeeinheit 20 anzuschließen, wenn der Restdruck über die Fülleitung 36 aus dem Reifen entwichen ist.

Zum Einbringen von Abdichtmittel in den Reifen wird die erfindungsgemäße Abdichtvorrichtung mit der Entnahmeeinheit 20 auf den Boden gestellt, wie es in Fig. 1 gezeigt ist, so daß der Behälter 10 mit seiner Öffnung nach unten angeordnet ist. Aufgrund der Abdeckkappe 60 kann kein Abdichtmittel über die Einlaßleitung 25 und die Auslaßleitung 28 ausfließen.

Nach Aktivierung der Gasdruckquelle strömt das Gas durch die Einlaßleitung 25 und aus deren den Einströmkanal 50 bildendem Ende in einen behälterseitig von dem geschlossenen Ende der Abdeckkappe 60 begrenzten Druckraum 68. Sobald der in der Einlaßleitung 25 und im Druckraum 68 herrschende Druck einen bestimmten, von der die Abdeckkappe 60 auf dem Leitungssystem 50, 52 festhaltenden Klemmkraft abhängigen Wert übersteigt, wird die Kappe 60 abgesprengt und in den Behälter 10 hineingestoßen.

Nach diesem Entfernen bzw. Wegsprengen der Kappe 60 kann das Gas über den Einströmkanal 50 in den Behälter 10 und durch das Abdichtmittel hindurch in den Bereich oberhalb des Abdichtmittelspiegels gelangen. Das in diesem Bereich unter sich erhöhendem Druck stehende Gas drückt das Abdichtmittel über den vom Einströmkanal 50 und vom Entnahmekanal 52 gebildeten Ringraum 54 der Auslaßleitung 28 durch die Fülleitung 36 in den Reifen. Der Hals 24 des Behälters 10 kann derart ausgestaltet und beispielsweise mit einer Einschnürung versehen sein, daß er sich dabei vorteilhaft auf den Verlauf der Strömung des Abdichtmittels auswirkt.

Auch im Fall eines vollständig und ohne Lufteinschluß gefüllten Behälters 10 wird das Abdichtmittel aufgrund der durch das in den Behälter 10 strömende Gas verursachten Druckerhöhung über den Entnahmekanal 52 der Auslaßleitung 28 aus dem Behälter 10 getrieben.

Die Strömung des Abdichtmittels während des Betriebs aus dem Behälter 10 in den Entnahmekanal 52 der Auslaßleitung 28 wird durch die sich im Behälter 10 befindende abgesprengte Kappe 60 in keiner Weise beeinträchtigt.

Ein wesentlicher Vorteil der Erfindung ist, daß Behälter 10 und Entnahmeeinheit 20 nicht erst unmittelbar vor dem Abdichtvorgang gekoppelt zu werden brauchen. Vielmehr kann die erfindungsgemäße Abdichtvorrichtung betriebsbereit gelagert und transportiert werden. Dieser benutzungsfreundliche Zustand kann z.B. bereits herstellerseitig geschaffen werden.

Nach dem vollständigen Entleeren des Behälters 10 kann ein neuer, mit Abdichtmittel gefüllter Behälter mit der Entnahmeeinheit 20 gekoppelt werden, wobei zuvor eine neue Abdeckkappe auf die Leitungsenden 50, 52 aufgesteckt wird. Die Abdichtvorrichtung ist dann für den nächsten Abdichtvorgang vorbereitet und kann wegen der durch die Kappe 60 gewährleisteten Auslaufsicherheit wiederum problemlos gelagert und transportiert werden.

## Patentansprüche

1. Entnahmeeinheit für eine Vorrichtung zum Abdichten aufblasbarer Gegenstände, insbesondere Reifen,
wobei die Entnahmeeinheit wenigstens eine an eine Gasdruckquelle anschließbare Einlaßleitung (25) und zumindest eine mit einem abzudichtenden Gegenstand koppelbare Auslaßleitung (28) aufweist,
**dadurch gekennzeichnet, dass** die Entnahmeeinheit lösbar mit einem ein Abdichtmittel enthaltenden Behälter (10) derart verbindbar, bevorzugt verschraubbar, ist, dass im verbundenen Zustand in den Behälter (10) hineinragende Enden (50, 52) der Leitungen (25, 28) durch eine mittels Gasdruck entfernbare, insbesondere absprengbare Verschlußanordnung (60) fluiddicht gegenüber dem Behälterinnenraum abgedichtet sind.

2. Entnahmeeinheit nach Anspruch 1,
**dadurch gekennzeichnet,**
**daß** die Verschlußanordnung (60) einteilig und insbesondere kappenartig ausgebildet ist.

3. Entnahmeeinheit nach Anspruch 1 oder 2,
**dadurch gekennzeichnet,**
**daß** die Verschlußanordnung (60) auf zumindest ein Leitungsende (50, 52) aufgeschoben oder aufgesteckt ist.

4. Entnahmeeinheit nach zumindest einem der vorhergehenden Ansprüche,
**dadurch gekennzeichnet,**
**daß** die Verschlußanordnung (60) auf zumindest ein Leitungsende (50, 52) aufgeklemmt und/oder mit dem Leitungsende (50, 52) verrastet ist.

5. Entnahmeeinheit nach zumindest einem der vorhergehenden Ansprüche,
**dadurch gekennzeichnet,**
**daß** die Verschlußanordnung (60) mit zumindest einem bevorzugt rippenartigen Dichtabschnitt (62, 64) an der Außenwand wenigstens eines Leitungsendes (50, 52) anliegt.

6. Entnahmeeinheit nach zumindest einem der vorhergehenden Ansprüche,
**dadurch gekennzeichnet,**
**daß** die Verschlußanordnung (60) in dichtenden Eingriff mit zumindest einem Leitungsende (50, 52) vorgespannt und insbesondere durch Anbringen an der Entnahmeeinheit (20) elastisch verformbar ist.

7. Entnahmeeinheit nach zumindest einem der vorhergehenden Ansprüche,
**dadurch gekennzeichnet,**
**daß** die Leitungsenden (50, 52) zumindest bereichsweise koaxial verlaufen, wobei bevorzugt das eine Leitungsende (50) über das andere Leitungsende (52) hinaus in den Behälter (10) hinein vorsteht.

8. Entnahmeeinheit nach zumindest einem der vorhergehenden Ansprüche,
**dadurch gekennzeichnet,**
**daß** die Verschlußanordnung (60) zumindest näherungsweise rotationssymmetrisch ausgebildet ist.

9. Entnahmeeinheit nach zumindest einem der vorhergehenden Ansprüche,
**dadurch gekennzeichnet,**
**daß** die Verschlußanordnung (60) zwei jeweils mit einem Leitungsende (50, 52) zusammenwirkende, axial beabstandete Dichtabschnitte (62, 64) aufweist.

10. Entnahmeeinheit nach zumindest einem der vorhergehenden Ansprüche,
**dadurch gekennzeichnet,**
**daß** Dichtabschnitte (62, 64) der Verschlußanordnung (60) im Bereich von etwa achsparallel verlaufenden Wandabschnitten (63, 65) ausgebildet sind, die durch einen schräg zu den Leitungsachsen verlaufenden Wandabschnitt (66) miteinander verbunden sind.

11. Entnahmeeinheit nach zumindest einem der vorhergehenden Ansprüche,
**dadurch gekennzeichnet,**
**daß** die Entnahmeeinheit (20) für den insbesondere flaschenförmigen Behälter (10), bevorzugt zur Aufnahme eines flaschenhalsartigen Anschlußabschnitts (24) des Behälters (10), wenigstens einen im wesentlichen zylindrischen Anschlußstutzen (22) aufweist.

12. Entnahmeeinheit nach zumindest einem der vorhergehenden Ansprüche,
**dadurch gekennzeichnet,**
**daß** die Einlaßleitung (25) und die Auslaßleitung (28) jeweils einen Innenabschnitt, der in das jeweilige Leitungsende (50, 52) übergeht und von dem bevorzugt das jeweilige Leitungsende (50, 52) senkrecht absteht, und einen Außenabschnitt umfassen, an den die Gasdruckquelle anschließbar ist bzw. mit dem der abzudichtende Gegenstand koppelbar ist, wobei bevorzugt die Innenabschnitte etwa parallel und die Außenabschnitte etwa senkrecht zu einer Längsachse (23) eines Anschlußstutzens (22) der Entnahmeeinheit (20) verlaufen.

13. Entnahmeeinheit nach zumindest einem der vorhergehenden Ansprüche,
**dadurch gekennzeichnet,**
**daß** die Leitungsenden (50, 52) innerhalb eines Anschlußstutzens (22) der Entnahmeeinheit (20) verlaufen und sich bevorzugt nicht über das freie Ende des Anschlußstutzens (22) hinaus erstrecken.

14. Vorrichtung zum Abdichten aufblasbarer Gegenstände, insbesondere Reifen, mit einem ein Abdichtmittel enthaltenden Behälter (10) und einer lösbar mit dem Behälter (10) verbundenen, bevorzugt verschraubten Entnahmeeinheit (20) nach einem der vorhergehenden Ansprüche, die wenigstens eine an eine Gasdruckquelle anschließbare Einlaßleitung (25) und zumindest eine mit einem abzudichtenden Gegenstand koppelbare Auslaßleitung (28) aufweist, wobei in den Behälter (10) hineinragende Enden (50, 52) der Leitungen (25, 28) durch eine mittels Gasdruck entfernbare, insbesondere absprengbare Verschlußanordnung (60) fluiddicht gegenüber dem Behälterinnenraum abgedichtet sind.

## Revendications

1. Unité de prélèvement pour un dispositif destiné à l'étanchement d'objets gonflables, en particulier de pneus,
l'unité de prélèvement présentant au moins une conduite d'admission (25) qui peut être raccordée à une source de gaz sous pression et au moins une conduite de sortie (28) qui peut être couplée à un objet à étancher, **caractérisée en ce que** l'unité de prélèvement peut être reliée de manière amovible, de préférence par vissage, avec un récipient (10) contenant une matière d'étanchement, de telle sorte qu'à l'état relié, des extrémités (50, 52) des conduites (25, 28), plongeant dans le récipient (10), sont étanchées vis-à-vis des fluides par rapport à l'intérieur du récipient par un système de fermeture (60) qui peut être enlevé, en particulier éjecté sous la pression d'un gaz.

2. Unité de prélèvement selon la revendication 1, **caractérisée en ce que** le système de fermeture (60) est réalisé d'une seule pièce et en particulier à la manière d'un capuchon.

3. Unité de prélèvement selon l'une ou l'autre des revendications 1 et 2, **caractérisée en ce que** le système de fermeture (60) est enfiché ou enfilé sur au moins une extrémité de conduite (50, 52).

4. Unité de prélèvement selon au moins l'une des revendications précédentes, **caractérisée en ce que** le système de fermeture (60) est serré sur au moins une extrémité de conduite (50, 52) et/ou enclenché avec l'extrémité de conduite (50, 52).

5. Unité de prélèvement selon au moins l'une des revendications précédentes, **caractérisée en ce que** le système de fermeture (60) est en appui avec au moins un tronçon d'étanchéité (62, 64), de préférence en forme de nervure, sur la paroi extérieure d'au moins une extrémité de conduite (50, 52).

6. Unité de prélèvement selon au moins l'une des revendications précédentes, **caractérisée en ce que** le système de fermeture (60) est précontraint en engagement d'étanchement avec au moins une extrémité de conduite (50, 52) et est élastiquement déformable en particulier par montage sur l'unité de prélèvement (20).

7. Unité de prélèvement selon au moins l'une des revendications précédentes, **caractérisée en ce que** les extrémités de conduites (50, 52) s'étendent coaxialement au moins localement, une des extrémités de conduite (50) faisant de préférence saillie au-delà de l'autre extrémité de conduite (52) jusque dans le récipient (10).

8. Unité de prélèvement selon au moins l'une des revendications précédentes, **caractérisée en ce que** le système de fermeture (60) est réalisé au moins approximativement avec symétrie de révolution.

9. Unité de prélèvement selon au moins l'une des revendications précédentes, **caractérisée en ce que** le système de fermeture (60) présente deux tronçons d'étanchement (62, 64) espacés axialement qui coopèrent chacun avec une extrémité de conduite (50, 52).

10. Unité de prélèvement selon au moins l'une des revendications précédentes; **caractérisée en ce que** les tronçons d'étanchement (62, 64) du système de fermeture (60) sont réalisés dans la région de tronçons de paroi (63, 65) s'étendant approximativement parallèlement à l'axe, lesquels sont reliés l'un à l'autre par un tronçon de paroi (66) s'étendant en oblique par rapport aux axes des conduites.

11. Unité de prélèvement selon au moins l'une des revendications précédentes, **caractérisée en ce que** l'unité de prélèvement présente au moins un embout (22) sensiblement cylindrique pour le récipient (10) en particulier en forme de bouteille, de préférence pour recevoir un tronçon de raccordement (24) en forme de col de bouteille.

12. Unité de prélèvement selon au moins l'une des revendications précédentes, **caractérisée en ce que** la conduite d'admission (25) et la conduite de sortie (28) comprennent chacune un tronçon intérieur qui se transforme en l'extrémité de conduite (50, 52) respective et dont de préférence l'extrémité de conduite (50, 52) respective se dresse à la verticale, et un tronçon extérieur auquel peut être raccordée la source de gaz sous pression ou auquel peut être couplé l'objet à étancher, et de préférence les tronçons intérieurs s'étendent approximativement parallèlement et les tronçons extérieurs s'étendent approximativement perpendiculairement à un axe longitudinal (23) d'un embout (22) de l'unité de prélèvement (20).

13. Unité de prélèvement selon au moins l'une des revendications précédentes, **caractérisée en ce que** les extrémités de conduites (50, 52) passent à l'intérieur d'un embout (22) de l'unité de prélèvement (20) et ne s'étendent de préférence pas au-delà de l'extrémité libre de l'embout (22).

14. Dispositif destiné à l'étanchement d'objets gonflables, en particulier de pneus, comportant un récipient (10) contenant une matière d'étanchement et une unité de prélèvement (20) reliée de manière amovible, de préférence vissée au récipient (10), selon l'une des revendications précédentes, laquelle unité présente au moins une conduite d'admission (25) qui peut être raccordée à une source de gaz sous pression et au moins une conduite de sortie (28) qui peut être couplée à un objet à étancher, des extrémités (50, 52) des conduites (25, 28), plongeant dans le récipient (10), étant étanchées vis-à-vis des fluides par rapport à l'intérieur du récipient par un système de fermeture (60) qui peut être enlevé, en particulier éjecté sous la pression d'un gaz.

## Claims

1. An extraction unit for the sealing of inflatable articles, in particular tyres, wherein the extraction unit has at least one inlet line (25) connectable to a source of gas pressure an at least one outlet line capable of being coupled to an article to be sealed,
**characterised in that** the extraction unit can be releasably connected, preferably screwed, to a container (10) containing a sealant, such that, in the connected state, ends (50, 52) of the lines (25, 28) which project into the container (10) are sealed in a fluid tight manner relative to the inner space of the container by a closure arrangement (60) which can be removed and in particular blown off by means of gas pressure.

2. An extraction unit in accordance with claim 1, **characterized in that** the closure arrangement (60) is formed in one piece and in particular in cap-like manner.

3. An extraction unit in accordance with claim 1 or claim 2, **characterized in that** the closure arrangement (60) is pushed or plugged onto at least one line end (50, 52).

4. An extraction unit in accordance with at least one of the preceding claims, **characterized in that** the closure arrangement (60) is clamped onto at least one line end (50, 52) and/or latched to the line end (50, 52).

5. An extraction unit in accordance with at least one of the preceding claims, **characterized in that** the closure arrangement (60) has at least one preferably rib-like sealing section (62, 64) which contacts the outer wall of at least one line end (50, 52).

6. An extraction unit in accordance with at least one of the preceding claims, **characterized in that** the closure arrangement (60) is prestressed into sealing engagement with at least one line end (50, 52) and is in particular elastically deformable by attachment to the extraction unit (20).

7. An extraction unit in accordance with at least one of the preceding claims, **characterized in that** the line ends (50, 52) extend co-axially at least regionally, with the one line end (50) preferably projecting beyond the other line end (52) into the container (10).

8. An extraction unit in accordance with at least one of the preceding claims, **characterized in that** the closure arrangement (60) is made at least approximately rotationally symmetrical.

9. An extraction unit in accordance with at least one of the preceding claims, **characterized in that** the closure arrangement (60) has two axially spaced apart sealing sections (62, 64) which respectively cooperate with one line end (50, 52).

10. An extraction unit in accordance with at least one of the preceding claims, **characterized in that** the sealing sections (62, 64) of the closure arrangement (60) are formed in the region of wall sections (63, 65) which extend approximately axially parallel and are connected to one another by a wall section (66) extending obliquely to the line axes.

11. An extraction unit in accordance with at least one of the preceding claims, **characterized in that** the extraction unit (20) for the container (10), in particular a flask-like container, preferably has at least one substantially cylindrical connection stub (22) to receive a connection section (24) of the container (10) resembling a flask neck

12. An extraction unit in accordance with at least one of the preceding claims, **characterized in that** the inlet line (25) and outlet line (28) each include an inner section which merges into the respective line end (50, 52) and from which the respective line end (50, 52) preferably projects at right-angles and an outer section to which the gas pressure source can be connected or to which the article to be sealed can be coupled, with the inner sections preferably extending approximately parallel and the outer sections approximately perpendicular to a longitudinal axis (23) of a connection stub (22) of the extraction unit (20).

13. An extraction unit in accordance with at least one of the preceding claims, **characterized in that** the line ends (50, 52) extend within a connection stub (22) of the extraction unit (20) and preferably do not extend beyond the free end of the connection stub (22).

14. An apparatus for the sealing of inflatable articles, in particular tyres, having a container (10) containing a sealant and an extraction unit (20) in accordance with any one of the preceding claims which is releasably connected, preferably screwed, to the container (10) and which has at least one inlet line (25) connectable to a gas pressure source and at least one outlet line (28) couplable to an article to be sealed, with ends (50, 52) of the lines (25, 28) which project into the container (10) being sealed in a fluid tight manner relative to the inner space of the container by a closure arrangement (60) which can be removed and in particular blown off by means of gas pressure.
